# EUROPEAN PATENT APPLICATION

(11) **EP 1 008 416 A1**
(43) Date of publication of application: **14.06.2000**
(21) Application number: 99308898.8
(22) Date of filing: 09.11.1999
(51) Int. Cl.: B23K 35/02, B23K 9/20

(54) **Plated aluminium weld stud**

(30) Priority: 08.12.1998 DE 19856613
(71) Applicant: EMHART INC., Newark, Delaware 19711 (US)
(72) Inventor: Schmitt, K. G., Dr.,-Ing., 35190 Giessen (DE); Krengel, Michael, Dr.,-Ing., 35396 Giessen (DE)
(74) Representative: Shaya, Darrin Maurice

(57) **Abstract**

The invention relates to a weld-on part made of aluminium or an aluminium alloy, which has a surface which is at least partially provided with a coating which preferably mainly contains titanium zirconium.

## Description

The invention relates to a weld-on part made of aluminium or an aluminium alloy.

Weld-on parts made of aluminium or an aluminium alloy are known which can be welded to a basic part which is also made of aluminium or an aluminium alloy. Aluminium has the characteristic that a hard, adhesive, transparent oxide coating, up to several mol layers thick, develops on the surface of the aluminium. It only takes a few seconds for an oxide coating of this kind to form on freshly slightly slit aluminium in the air and with water. The oxide coating is largely insoluble in a pH range between 4.5 and 8.5. The oxide coating gives the part protection against corrosion. It does, however, in some circumstances, adversely affect further processing steps to which the welded part may be subjected.

Based on this, the object of the present invention is to provide a connecting piece which is so designed that it can more easily be subjected to further processing steps.

This object is achieved according to the invention with a connecting piece with the characteristics of claim 1. Advantageous further advances and developments of the connecting piece are the subject of the dependent claims.

Among further processing steps are to be understood the application of coatings of varnish, bonding agent or plastic on to the weld-on part. The application of, for example, coats of varnish is in particular of particular significance in the construction of automobiles if the connecting piece is preferably a weld stud with a welding face. An improvement in the adhesive properties for coatings of varnish, bonding agent or plastic is achieved where the weld-on part has a surface which is at least partially provided with a coating which contains titanium. Preferably the coating contains mainly titanium zirconium. It is in particular proposed that the whole surface of the weld-on part is provided with the coating.

The coating is preferably formed by treating the weld-on part in an acid solution. The product known as Alodine 2040, sold by the company Henkel Surface Technologies, can, for example, be used as the preparation for the solution. This gives a chromium-free caustic passivation for aluminium.

The weld-on part is preferably a weld stud made of aluminium or an aluminium alloy with a welding face. The welding process is carried out by means of arc welding. In particular it is proposed that the weld stud has a welding face which is provided with the coating. Contact resistance between the weld-on part, the pin and a supporting structure to which the weld stud is to be welded is reduced because of the coating. Providing the coating in the region at least of the welding face has a positive influence on the welding process. In particular a qualitatively high-grade welded connection is achieved, enabling the energy required to weld the pin to be reduced.

According to a further advantageous development it is proposed that the coating of the weld-on part has a sufficient thickness to prevent the formation of aluminium oxide on the weld-on part. On the other hand the coating has the positive properties of, for example, improving the adhesive capacity of coatings of varnish, bonding agent or plastic.

Further advantages and details of the weld-on part according to the invention are explained using the embodiment shown in the drawings, in which
Fig. 1 shows a weld stud in full section and
Fig. 2 shows a weld stud with thread.

Weld-on pins are used in many areas of industrial manufacture. They enable metal connections without making holes and form a link between a basic structure and a component which is to be fastened. A weld stud can serve to fasten, for example, pipe conduits, push buttons, plastic nuts or cable clips. The fastening of such parts takes place, for example, on the shank of the weld stud.

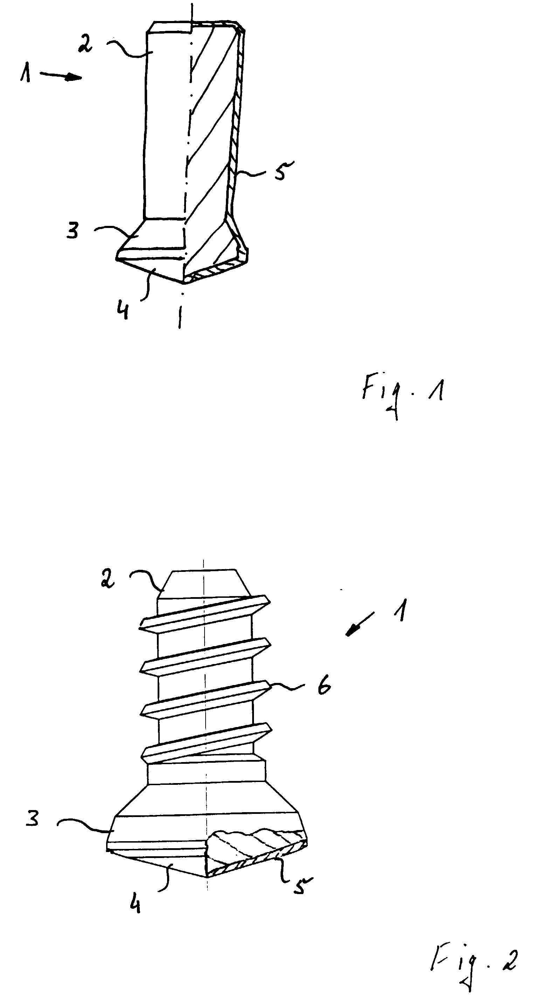

In Fig. 1 a weld stud is shown. The weld stud 1 has a shank 2. A welding head has been formed at one end of the shank 2. The welding head has a portion tapering conically from the shank which forms a welding face 4.

The shank 2 is designed as cylindrical in the embodiment shown. The weld stud 1 is made of aluminium or an aluminium alloy. The weld stud 1 is connected by means of arc welding to a structure not shown, which is also made of aluminium or an aluminium alloy. This structure may be, for example, the body of a motor vehicle. It may also be parts of the body of a motor vehicle.

In the embodiment of a weld stud 1 shown in Fig. 1 this has a coating 5. The coating 5 comprises mainly titanium zirconium. The coating 5 is designed on the whole surface of the weld stud 1. In the region of the welding face 4 the coating lowers the contact resistance, so the weld stud can be welded to a structure at a lower welding energy. The development of aluminium dioxide is prevented by the coating in the region of the shank 2 and of the welding head 3. There is an improvement in the adhesive properties of the weld stud for coatings of varnish, bonding agent or plastic owing to the coating 5.

Fig. 2 shows a second embodiment of a weld stud 1. The weld stud 1 has a shank 2. A Christmas tree thread 6 is formed on the shank 2. A welding head is formed at a free end of the shank 2. The welding head 3 has a welding face 4, which comes into contact during arc welding with a structure not shown. The welding face 4 is provided with a coating 5. The coating 5 comprises mainly titanium zirconium.

## Claims

1. Weld-on part made of aluminium or an aluminium alloy, characterised in that the weld-on part (1) has a surface which is at least partially provided with a coating (5) containing titanium.

2. Weld-on part according to claim 1, characterised in that the coating (5) mainly contains titanium zirconium.

3. Weld-on part according to claim 1 or 2, characterised in that the whole surface is provided with the coating (5).

4. Weld-on part according to claim 1, 2 or 3, characterised in that the coating (5) is formed by treating the weld-on part in an acid solution.

5. Weld-on part according to one of claims 1 to 4, characterised in that it is a weld stud (1) with a welding face (4).

6. Weld-on part according to claim 5, characterised in that at least the welding face (4) is provided with the coating (5).
